(19) Europäisches Patentamt
European Patent Office
Office européen des brevets

(11) **EP 3 224 319 B1**

(12) **EUROPEAN PATENT SPECIFICATION**


(45) Date of publication and mention of the grant of the patent:
**21.04.2021 Bulletin 2021/16**

(21) Application number: **15819869.7**

(22) Date of filing: **24.11.2015**

(51) Int Cl.:
***C08L 69/00*** *(2006.01)* ***G02B 1/04*** *(2006.01)*

(86) International application number:
**PCT/IB2015/059076**

(87) International publication number:
**WO 2016/083994 (02.06.2016 Gazette 2016/22)**


(54) **ANTI-FOG POLYCARBONATE COMPOSITIONS WITH OPTICAL PROPERTIES AND ARTICLES THEREOF**

BESCHLAGHEMMENDE POLYCARBONATZUSAMMENSETZUNGEN MIT OPTISCHEN EIGENSCHAFTEN UND DARAUS HERGESTELLTE GEGENSTÄNDE

COMPOSITIONS DE POLYCARBONATE ANTIBUÉE AYANT DES PROPRIÉTÉS OPTIQUES ET ARTICLES CORRESPONDANTS


(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2014 US 201462085603 P**

(43) Date of publication of application:
**04.10.2017 Bulletin 2017/40**



(73) Proprietor: **SABIC Global Technologies B.V.**
**4612 PX Bergen op Zoom (NL)**

(72) Inventor: **DE BROUWER, Hans**
**5061 AT, Oisterwijk (NL)**

(74) Representative: **Sabic Intellectual Property Group**
**Sabic Intellectual Property Department**
**P.O. Box 3008**
**6160 GA Geleen (NL)**



(56) References cited:
**WO-A1-2005/066257 CN-A- 101 851 407**

- **TANG Y W ET AL: "SYNTHESIS OF SURFACE-MODIFYING MACROMOLECULES FOR USE IN SEGMENTED POLYURETHANES", JOURNAL OF APPLIED POLYMER SCIENCE, WILEY, US, vol. 62, no. 8, 21 November 1996 (1996-11-21), pages 1133-1145, XP000632034, ISSN: 0021-8995, DOI: 10.1002/(SICI)1097-4628(19961121)62:8<1133 :: AID-APP1>3.0.CO;2-J**


EP 3 224 319 B1


Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### RELATED APPLICATIONS

This application claims benefit to U.S. Patent Application No. 62/085,603, filed on November 30, 2014.

### TECHNICAL FIELD

The disclosure concerns polycarbonate compositions with anti-fog and optical properties and articles composed thereof.

### BACKGROUND

Polycarbonates form a highly versatile class of polymers. Polycarbonate resins are often featured in the manufacture of a variety of products through a number of processes such as molding, extrusion, and thermoforming processes. Thermoplastics are esteemed in manufacturing for their low production cost and ease of processability as well as their ductility and high impact strength at room temperature, high thermal resistance, and capacity for distinctive optical qualities.

Document WO 2005/066257 discloses a method for making a fog resistant thermoplastic article that includes conditioning a thermoplastic article by exposing it to an aqueous environment sufficient to result in fog resistance.

### SUMMARY

The invention relates to an anti-fog article as defined in claim 1, to a composition as defined in claim 8, and to a method as defined in claim 12.

Polycarbonates do however present certain deficiencies and are often modified through the introduction of additives or fillers to combat undesirable properties or to enhance preferred qualities. For example, pure polycarbonates are sensitive to ultraviolet (UV) exposure and can be processed with UV stabilizing components to prevent degradation. Fillers can be introduced to a polycarbonate polymer matrix to improve impact strength. Furthermore, polycarbonates are susceptible to the accumulation of water droplets on the material surface. This proves problematic in uses where the polycarbonate material is used not only for its resilience, but also for its optical qualities such as a high refractive index (RI) and optical clarity. The accumulation of water droplets/particles on the surface of the polycarbonate material reduces the transparency, or the transmission of visible light through the material. The accumulation, commonly known as fogging, is particularly detrimental where polycarbonates are used in end-use applications such as goggles, greenhouse panels, lighting models, ophthalmic lenses, windshields, or other uses requiring optimal transparency.

In an aspect, polycarbonate resins, often employed for use as transparent materials in automotive and commercial applications, can be susceptible to the accumulation of moisture on the surface of the resin. The water accumulation can significantly diminish the transparency and clarity of the polycarbonate resin, which can prove harmful where the polycarbonate is particularly valued for its ability to transmit light and subject to regular exposure to moisture (such as, an automotive headlamp). There remains a need for polycarbonate compositions that achieve the appropriate balance of strength and transparency while retaining a balanced profile of other properties such as thermal resilience, ability to be formed thin-walled, flow, ductility, and processability, without compounded processing such as the application of a coating to the polycarbonate or some other secondary anti-fog operation.

In an aspect, thermoplastic polycarbonate compositions can comprise a polycarbonate admixture comprising an amphiphilic oligomer block additive wherein the thermoplastic resin has a resin surface exhibiting optical qualities, wherein the resin surface is resistant to water accumulation, and wherein the amphiphilic oligomer block additive is less than about 5 wt. % of the total weight of the thermoplastic resin.

In an aspect, the present disclosure relates to methods of preparing polycarbonates exhibiting anti-fog ability and optical qualities such as transparency and clarity. The disclosed interfacial process including a mixture of an amphiphilic oligomer block additive enhances the optical properties of bisphenol A (BPA) polycarbonate (e.g., SABIC Innovative Plastics Lexan™ polycarbonate resin) (Lexan™ is a trademark of SABIC Innovative Plastics IP B. V.).

In an aspect, the present disclosure relates to articles comprising the present disclosure. As an example, the present disclosure relates to automotive lighting and lens articles comprising the same.

It will be apparent to those skilled in the art that various modifications and variations can be made in the present invention without departing from the scope of the invention. Other embodiments of the invention will be apparent to those skilled in the art from consideration of the specification and practice of the invention disclosed herein. It is intended that the specification and examples be considered as exemplary only, with a true scope of the invention being indicated by the following claims.

## DETAILED DESCRIPTION

Anti-fog properties can be achieved through different physical concepts. For example, if an article can be modified in such a way that the article/water contact angle is very low (e.g., less than 30° or preferably less than 20°), a water droplet on the surface will spread and wet the surface until it no longer exists as a droplet but forms a thin layer with minimal effect on optical performance. This is typically done by application of a hydrophilic coating. As a further example, if the article can be modified in such a way that the article/water contact angle is very high (e.g., greater than about 110°, greater than about 120°), the droplets will try to minimize their contact angle with the object and easily run / roll off the surface, a process which will accelerate if several droplets collide. Next to the optical advantages of not having droplets on the surface, this mechanism also brings a certain auto-cleaning capability since the moving water droplets may take along dust or other foreign particles along their path.

In an aspect, fluorooligomers due at least in part to their higher molar mass (as compared to conventional anti-fog and anti-static additives) will impart a more permanent performance improvement in anti-static and/or anti-fog component. As an example, fluorooligomers described in the article Y.W Tang, "Synthesis of surface-modifying macromolecules for use in segmented polyurethanes," J. Appl. Polym. Sci., vol. 62, issue 8, pp, 1133-1145 (Nov. 1996) can be used to improve one or more of anti-static and anti-fog properties of a material to which the fluorooligomers are added. It is understood that in certain aspects, sufficient compatibility of a mid-block to the fluorooligomers may be achieved to anchor the oligomer to the bulk plastic material and sufficient incompatibility (driven by the fluoro end groups) may be leveraged to migrate the oligomer to the surface of the material. As such, surface modifying molecules (e.g., fluorooligomers) can be blended in a thermoplastic composition at levels up to about 5 wt. % of the total composition. After molding or extrusion, the oligomers can migrate to the surface of the molded material, thereby eliminating the need for a coating step or other secondary operation.

In an aspect, the present disclosure relates to thermoplastic compositions comprising a polycarbonate admixture comprising an amphiphilic oligomer block additive wherein the amphiphilic oligomer block additive can be less than about 5 wt. % of the total weight of the thermoplastic polycarbonate resin. The amphiphilic additive can comprise a mid-domain and organo-fluoro terminal groups, wherein the mid-domain can comprise soft segments or hard segments. The polycarbonate admixture comprising the amphiphilic additive can contain a resin surface exhibiting optical qualities, such as transparency and clarity, and the resin surface can be resistant to water accumulation (e.g., having a contact angle that allows water to roll off the surface, a contact angle of greater than about 90°, a contact angle of greater than about 100°, a contact angle of greater than about 110°, a contact angle of greater than about 120°).

Materials formed from the compositions and methods of the present disclosure can be useful for the following applications: anti-fog windows; lenses and/or transparent covers for lighting applications such as automotive lighting, street lighting, outdoor lighting, and high efficiency lighting such as light emitting diode (LED) applications, organic LED applications, fluorescent lighting applications, vapor gas discharge lighting application, and neon light application, which can produce less heat as a byproduct, compared to conventional light sources. These relatively new lighting systems which emit less heat can be particularly susceptible to fogging. With less heat, any accumulated moisture on the surface of these lighting systems is less apt for evaporation, thereby compounding the fogging problem. Accordingly, the use of the disclosed compositions in an LED system, as well as other lower heat emitting light appliances, can improve the overall transparency and transmission of the system.

Before the present methods and systems are disclosed and described, it is to be understood that the methods and systems are not limited to specific components or to particular compositions. It is also to be understood that the terminology used herein is for the purpose of describing particular embodiments only and is not intended to be limiting.

POLYCARBONATE POLYMER

The present disclosure comprises a polycarbonate. For example the disclosed thermoplastic composition can comprise a polycarbonate admixture wherein the polycarbonate includes a polymer or copolymer. The terms "polycarbonate" or "polycarbonates" as used herein includes copolycarbonates, homopolycarbonates and (co)polyester carbonates. Suitable aromatic thermoplastic polymers that may be used include aromatic polycarbonate, polyphenylene ether, aromatic polyester, polyphenylene ether/styrene blend, aromatic polyamide, polyethylene terephthalate, blends thereof, or a combination comprising at least one of the foregoing polymers. The polycarbonate articles may be prepared from polycarbonate, including aromatic polycarbonate, a polyester, a (co)polyester carbonate, copolymers of aromatic polycarbonates, or blends thereof including blends with other thermoplastics resins.

While various types of polycarbonates could potentially be used in accordance with embodiments and are described in detail below, of particular interest are BPA polycarbonates, such as Lexan™ polycarbonate resin. More particularly, according to embodiments, Lexan™ polycarbonate can be used for a wide range of applications that make use of its interesting combination of mechanical and optical properties. Due to its transparency, this BPA polycarbonate can find use in optical media, automotive lenses, roofing elements, greenhouses, photovoltaic devices, and safety glass.

The developments in light emitting diode (LED) technology have led to significantly prolonged lifetimes for the lighting products to which this technology can be applied. This has led to increased requirements on the durability of polycarbonates, in particular on its optical properties. In other applications such as automotive lighting, product developers may feel the need to design increasingly complex shapes which cannot be made out of glass and for which the heat requirements are too stringent for polymethyl methacrylate (PMMA). Also in these applications polycarbonate is the material of choice, but the high transparency of PMMA and glass should be approached as closely as possible.

As noted above, although BPA polycarbonates, such as Lexan* polycarbonates are of particular interest, various polycarbonates could potentially be employed in the embodiments disclosed herein. XHT (a PPPBP/BPA copolycarbonate comprising about 33 mol % PPPBP polycarbonate - also called 3,3-bis(4-hydroxyphenyl)-2-phenylisoindolin-1-one). For example, the term "polycarbonate" is intended to refer to compositions having repeating structural carbonate units of formula (1)

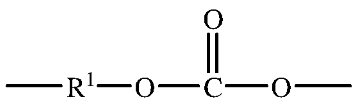
(1)

in which at least 60 percent of the total number of $R^1$ groups contain aromatic moieties and the balance thereof are aliphatic, alicyclic, or aromatic. In an aspect, each $R^1$ is a $C_{6-30}$ aromatic group, that is, contains at least one aromatic moiety. $R^1$ can be derived from a dihydroxy compound of the formula $HO-R^1-OH$, in particular of formula (2)

$HO-A^1-Y^1-A^2-OH$ (2)

wherein each of $A^1$ and $A^2$ is a monocyclic divalent aromatic group and $Y^1$ is a single bond or a bridging group having one or more atoms that separate $A^1$ from $A^2$. In an aspect, one atom separates $A^1$ from $A^2$. Specifically, each $R^1$ can be derived from a dihydroxy aromatic compound of formula (3)

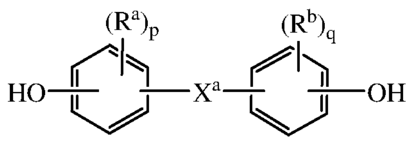
(3)

wherein $R^a$ and $R^b$ are each independently a halogen, $C_{1-12}$ alkoxy, or $C_{1-12}$ alkyl; and p and q are each independently integers of 0 to 4. It will be understood that $R^a$ is hydrogen when p is 0, and likewise $R^b$ is hydrogen when q is 0.

Examples of types of bisphenol compounds that may be represented by formula (3) include the bis(hydroxyaryl)alkane series such as, 1,1-bis(4-hydroxyphenyl)methane; 1,1-bis(4-hydroxyphenyl)ethane, 2,2-bis(4-hydroxyphenyl)propane (or bisphenol A); 2,2-bis(3,5-dibromo-4-hydroxyphenyl)propane; 2,2-bis(3,5-dimethyl-4-hydroxyphenyl)propane; 2,2-bis(4-hydroxyphenyl)butane; 2,2-bis(4-hydroxyphenyl)octane; 1,1-bis(4-hydroxyphenyl)propane; 1,1-bis(4-hydroxyphenyl)n-butane; bis(4-hydroxyphenyl)phenylmethane; 2,2-bis(4-hydroxy-1-methylphenyl)propane; 1,1-bis(4-hydroxy-t-butylphenyl)propane; 2,2-bis(4-hydroxy-3-bromophenyl)propane; 1,1-bis(4-hydroxyphenyl)decane; 4,4-dihydroxydiphenyl ether; 4,4-thiodiphenol; 4,4-dihydroxy-3,3-dichlorodiphenyl ether; 4,4-dihydroxy-2,5-dihydroxydiphenyl ether; or the like; bis(hydroxyaryl)cycloalkane series such as, 1,1-bis(4-hydroxyphenyl)cyclopentane; 1,1-bis(4-hydroxyphenyl)cyclohexane; 1,1 -bis(3,5-dimethyl-4-hydroxyphenyl)cyclohexane; 1,1-bis(4-hydroxyphenyl)cyclododecane; 1,1-bis(3,5-dimethyl-4-hydroxyphenyl)cyclododecane; 1,1-bis-(4-hydroxyphenyl)-3,3,5-trimethylcyclohexane; or the like, or combinations comprising at least one of the foregoing bisphenol compounds.

Other examples of bisphenol compounds that may be represented by formula (3) include those where $X^a$ is -O-, -S-, -S(O)-, or -S(O)2-, such as 4,4'-dihydroxy diphenylether, 4,4'-dihydroxy-3,3'-dimethylphenyl ether, or the like; bis(hydroxy diaryl)sulfides, such as 4,4'-dihydroxy diphenyl sulfide, 4,4'-dihydroxy-3,3'-dimethyl diphenyl sulfide, or the like; bis(hydroxy diaryl) sulfoxides, such as, 4,4'-dihydroxy diphenyl sulfoxides, 4,4'-dihydroxy-3,3'-dimethyl diphenyl sulfoxides, or the like; bis(hydroxy diaryl)sulfones, such as 4,4'-dihydroxy diphenyl sulfone, 4,4'-dihydroxy-3,3'-dimethyl diphenyl sulfone, or the like; or combinations comprising at least one of the foregoing bisphenol compounds.

Also in formula (3), $X^a$ is a bridging group connecting the two hydroxy-substituted aromatic groups, where the bridging group and the hydroxy substituent of each $C_6$ arylene group are disposed ortho, meta, or para (specifically para) to each other on the C6 arylene group. In an aspect, the bridging group $X^a$ is single bond, -O-, -S-, -S(O)-, $-S(O)_2-$, - C(O)-, or a $C_{1-18}$ organic group. The $C_{1-18}$ organic bridging group can be cyclic or acyclic, aromatic or non-aromatic, and can further comprise heteroatoms such as halogens, oxygen, nitrogen, sulfur, silicon, or phosphorous. The $C_{1-18}$

organic group can be disposed such that the C6 arylene groups connected thereto are each connected to a common alkylidene carbon or to different carbons of the $C_{1-18}$ organic bridging group. In one aspect, p and q is each 1, and $R^a$ and $R^b$ are each a $C_{1-3}$ alkyl group, specifically methyl, disposed meta to the hydroxy group on each arylene group.

Further to the description above, the term "polycarbonates" is intended to refer to homopolycarbonates (wherein each $R^1$ in the polymer is the same), copolymers comprising different $R^1$ moieties in the carbonate ("copolycarbonates"), copolymers comprising carbonate units and other types of polymer units, such as ester units, and combinations comprising at least one of homopolycarbonates and/or copolycarbonates.

A specific type of copolymer is a polyester carbonate, also known as a polyester-polycarbonate. Such copolymers further contain, in addition to recurring carbonate chain units of formula (1), repeating units of formula (4)

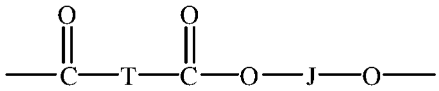

(4)

wherein J is a divalent group derived from a dihydroxy compound, and can be, for example, a $C_{2-10}$ alkylene, a $C_{6-20}$ cycloalkylene a $C_{6-20}$ arylene, or a polyoxyalkylene group in which the alkylene groups contain 2 to 6 carbon atoms, specifically 2, 3, or 4 carbon atoms; and T is a divalent group derived from a dicarboxylic acid, and can be, for example, a $C_{2-10}$ alkylene, a $C_{6-20}$ cycloalkylene, or a $C_{6-20}$ arylene. Copolyesters containing a combination of different T and/or J groups can be used. The polyesters can be branched or linear.

Aromatic dicarboxylic acids that can be used to prepare the polyester units include isophthalic or terephthalic acid, 1,2-di(p-carboxyphenyl)ethane, 4,4'-dicarboxydiphenyl ether, 4,4'-bisbenzoic acid, or a combination comprising at least one of the foregoing acids. Acids containing fused rings can also be present, such as in 1,4-, 1,5-, or 2,6-naphthalenedicarboxylic acids. Specific dicarboxylic acids include terephthalic acid, isophthalic acid, naphthalene dicarboxylic acid, cyclohexane dicarboxylic acid, or a combination comprising at least one of the foregoing acids. A specific dicarboxylic acid comprises a combination of isophthalic acid and terephthalic acid wherein the weight ratio of isophthalic acid to terephthalic acid is 91:9 to 2:98. In another specific aspect, J is a $C_{2-6}$ alkylene group and T is p-phenylene, m-phenylene, naphthalene, a divalent cycloaliphatic group, or a combination thereof. This class of polyester includes the poly(alkylene terephthalates).

In addition to the polycarbonates described above, combinations of the polycarbonate with other thermoplastic polymers, for example combinations of homopolycarbonates and/or polycarbonate copolymers with polyesters, can be used. Useful polyesters can include, for example, polyesters having repeating units of formula (4), which include poly(alkylene dicarboxylates), liquid crystalline polyesters, and polyester copolymers. The polyesters described herein are generally completely miscible with the polycarbonates when blended.

Useful polyesters can include aromatic polyesters, poly(alkylene esters) including poly(alkylene arylates), and poly(cycloalkylene diesters). Aromatic polyesters can have a polyester structure according to formula (6), wherein J and T are each aromatic groups as described hereinabove. In an aspect, useful aromatic polyesters can include, for example, poly(isophthalate-terephthalate-resorcinol) esters, poly(isophthalate-terephthalate-bisphenol A) esters, poly[(isophthalate-terephthalate-resorcinol) ester-co-(isophthalate-terephthalatebisphenol A)] ester, or a combination comprising at least one of these. Also contemplated are aromatic polyesters with a minor amount, e.g., about 0.5 to about 10 weight percent, based on the total weight of the polyester, of units derived from an aliphatic diacid and/or an aliphatic polyol to make copolyesters. Poly(alkylene arylates) can have a polyester structure according to formula (6), wherein T comprises groups derived from aromatic dicarboxylates, cycloaliphatic dicarboxylic acids, or derivatives thereof. Examples of specifically useful T groups include 1,2-, 1,3-, and 1,4-phenylene; 1,4- and 1,5- naphthylenes; cis- or trans-1,4-cyclohexylene; and the like. Specifically, where T is 1,4-phenylene, the poly(alkylene arylate) is a poly(alkylene terephthalate). In addition, for poly(alkylene arylate), specifically useful alkylene groups J include, for example, ethylene, 1,4-butylene, and bis-(alkylene-disubstituted cyclohexane) including cis- and/or trans-1,4-(cyclohexylene)dimethylene. Examples of poly(alkylene terephthalates) include poly(ethylene terephthalate) (PET), poly(1,4-butylene terephthalate) (PBT), and poly(propylene terephthalate) (PPT). Also useful are poly(alkylene naphthoates), such as poly(ethylene naphthanoate) (PEN), and poly(butylene naphthanoate) (PBN). A specifically useful poly(cycloalkylene diester) is poly(cyclohexanedimethylene terephthalate) (PCT). Combinations comprising at least one of the foregoing polyesters can also be used.

In various aspects, the polycarbonate admixture of the disclosed composition can comprise a polycarbonate and polycarbonate copolymer. In various examples, the polycarbonate copolymer can comprise a polyester. Such copolymers further contain carbonate units derived from oligomeric ester-containing dihydroxy compounds (also referred to herein as hydroxy end-capped oligomeric acrylate esters).

## AMPHIPHILIC OLIGOMER BLOCK ADDITIVE

The thermoplastic composition disclosed herein comprises an amphiphilic (amphipathic) oligomer block additive. The amphiphilic oligomer block additive can be introduced into the polycarbonate base resin to modify the surface of the polycarbonate base thereby charging the resulting resin with anti-fogging properties. For example, the additive can alter the surface properties of the polycarbonate resin in a moist or water-laden environment. As a component of a polycarbonate base admixture, the additive can migrate to the moisture exposed surface of the base resin, thereby inhibiting the accumulation of water thereupon.

In some aspects, the surface modifying amphiphilic additive can be a macromolecular copolymer of the polymeric base resin. Amphiphilic as used herein refers to the presence of both hydrophobic and hydrophilic (or polar) characteristics. : The amphiphilic oligomer additive has a mid-domain and terminal groups, wherein the mid-domain comprises hard and soft segments, while the exterior terminal groups feature polar carbon bonding provided by organo-fluoro groups.

The mid-domain of the amphiphilic additive comprises oligomeric copolymer units that contain "soft" and "hard" segments. The oligomer copolymer units comprising the mid-domain can include at least one hydrophobic portion and at least one hydrophilic portion that contribute to the overall amphiphilic nature of the macromolecular additive. The classical distinction of "soft" or "hard" segment refers to the properties of given segments along the macromolecular backbone of a segmented polymer. Soft segments can include non-polar oligomers such as polydimethylsiloxane, polybutadiene, polyisobutylene, and poly(ethylene-butylene) and generally lend the copolymer flexibility. The hard segments are polar, can often be reinforcing fillers, and can primarily consist of urethane, urea, urethaneurea, amide, aramide, imide, or aromatic ester groups. In an example, the mid-domain of the amphiphilic additive can comprise a hard, polar segment. In a further example, the hard polar segment can be a urethane, ester, amide, sulfonamide, or a carbonate. The mid-domain further comprises a soft segment. These soft segments can be the sections of the mid-domain which are not polar hard segments.

In further aspects, the oligomeric copolymer unit of the mid-domain can be comprised of relatively short repeating units which make up the soft or hard segments of the mid-domain. In an example, the molecular weight of the polymer chains within the mid-domain of the additive can be less than the molecular weight of the polycarbonate base resin. In a further example, the molecular weight of the soft segment of the mid-domain can be between 200 and 5000g/mol.

The terminal groups of the amphiphilic oligomer block additive comprise $\alpha$-$\omega$ terminal organo-fluoro oligomer groups. In an example, the fluoro-oligomer groups can be perfluoroalkyl groups. As described herein, these organo-fluro oligomer groups can further contribute to the amphiphilic properties of the additive.

In various aspects, the preparation of a segmented polymer having soft and hard segments can feature the reaction of diisocyanate with a polar-terminating soft segment oligomer to generate a pre-polymer. To form a conventional segmented polymer, the chain is extended with a low molecular weight polar "hard" segment to provide a segmented copolymer. For the amphiphilic oligomer block additive described herein, the soft segment precursor can be reacted with a linear isocyante to generate a prepolymer which is subsequently reacted with a fluoro-alcohol to provide a fluoro end cap rather reacted with than a hard segment chain extender. As an example, the soft segment precursor can be polyethylene oxide, polypropylene oxide, polyetraramethylene oxide, polyisobutylene, polybutadienes, polyethylene adipate, polytetramethylene adipate, polycaprolactone, polydimethylsiloxane, or polycarbonate, or some combination thereof. Exemplary fluoro-alcohols can include 2-(perfluoroalkylethanlol (BA-L), BA-N, FSO-100, and FSN-100.

In further aspects, the amphiphilic quality of the additive can induce anti-fogging behavior at the resin surface. The amphiphilic additive inherits amphiphilic behavior from the combined presence of soft hydrophobic portions of the mid-domain and the polar organo-fluoro tails of the terminal oligomeric groups as well as any hard, polar mid-domain segments. More specifically, the amphiphilic additive can alter the surface chemistry of the base polycarbonate resin via migration of the fluoro-endcapped polymer chains. In an example, the fluoro-endcapped polymer chains can cause the additive to migrate to the surface of the polycarbonate admixture while the non-polar and non-fluoro alkyl segments of the macromolecular oligomer remain oriented towards the interior of the admixture. At the surface however, the polar fluorine chains can be exposed due to the incompatibility of the halogen with the polycarbonate base resin. Thus the migration can create a hydrophobic interface between the polycarbonate resin and the atmosphere.

In an aspect, the amphiphilic additive in the polycarbonate resin can create a hydrophobic interface at the thermoplastic resin surface. The amphiphilic additive can modify the resin surface such that surface tension between the resin and water droplets can be destabilized. Accordingly, water droplets cannot adhere soundly to the surface of the resin and can instead "roll off," or are repelled.

## OTHER ADDITIVES

The disclosed thermoplastic composition optionally comprises one or more additives conventionally used in the manufacture of molded thermoplastic parts with the proviso that the optional additives do not adversely affect the

desired properties of the resulting composition. Mixtures of optional additives can also be used. Such additives may be mixed at a suitable time during the mixing of the components for forming the composite mixture. For example, the disclosed composition optionally comprises one or more additional fillers, plasticizers, stabilizers, anti-static agents, flame-retardants, impact modifiers, colorant, antioxidant, and/or mold release agents. In one aspect, the composition further comprises one or more optional additives selected from an antioxidant, flame retardant, inorganic filler, and stabilizer.

Exemplary heat stabilizers include, for example, organo phosphites such as triphenyl phosphite, tris-(2,6-dimethylphenyl)phosphite, tris-(mixed mono-and dinonylphenyl)phosphite or the like; phosphonates such as dimethylbenzene phosphonate or the like, phosphates such as trimethyl phosphate, or the like, or combinations including at least one of the foregoing heat stabilizers. Heat stabilizers are generally used in amounts of from 0.01 to 0.5 parts by weight based on 100 parts by weight of the total composition, excluding any filler.

Exemplary antioxidants include either a primary or a secondary antioxidant. For example, antioxidants include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-ditert-butyl-4-hydroxyhydrocinnamate)] methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations including at least one of the foregoing antioxidants. Antioxidants are generally used in amounts of from 0.01 to 0.5 parts by weight, based on 100 parts by weight of the total composition, excluding any filler.

The disclosed thermoplastic compositions can further comprise an additional filler, such as, for example, an inorganic filler or reinforcing agent. The specific composition of a filler, if present, can vary, provided that the filler is chemically compatible with the remaining components of the thermoplastic composition. In one aspect, the thermoplastic composition comprises a mineral filler. In another aspect, the thermoplastic composition comprises a filler comprising talc. If present, the amount of filler can comprise any amount suitable for the thermoplastic composition that does not adversely affect the desired properties thereof.

In another aspect, the filler can comprise silicates and silica powders, such as aluminum silicate (mullite), synthetic calcium silicate, zirconium silicate, fused silica, crystalline silica graphite, natural silica sand, or the like; boron powders, such as boronnitride powder, boron-silicate powders, or the like; oxides, such as $TiO_2$, aluminum oxide, magnesium oxide, or the like; calcium sulfate (as its anhydride, dihydrate or trihydrate), or the like; talc, including fibrous, modular, needle shaped, lamellar talc, or the like; wollastonite; surface-treated wollastonite; glass spheres such as hollow and solid glass spheres, silicate spheres, aluminosilicate, or the like; kaolin, including hard kaolin, soft kaolin, calcined kaolin, kaolin comprising various coatings known in the art to facilitate compatibility with the polymeric matrix resin, or the like; single crystal fibers or "whiskers" such as silicon carbide, alumina, boron carbide, iron, nickel, copper, or the like; fibers (including continuous and chopped fibers), carbon fibers, glass fibers, such as E, A, C, ECR, R, S, D, or NE glasses, or the like; sulfides such as molybdenum sulfide, zinc sulfide or the like; barium compounds such as barium titanate, barium ferrite, barium sulfate, heavy spar, or the like; metals and metal oxides such as particulate or fibrous aluminum, bronze, zinc, copper and nickel or the like; flaked fillers such as glass flakes, flaked silicon carbide, aluminum diboride, aluminum flakes, steel flakes or the like; fibrous fillers, for example short inorganic fibers such as those derived from blends comprising at least one of aluminum silicates, aluminum oxides, magnesium oxides, and calcium sulfate hemihydrate or the like; natural fillers and reinforcements, such as wood flour obtained by pulverizing wood, fibrous products such as cellulose, cotton, or the like; organic fillers such as polytetrafluoroethylene; reinforcing organic fibrous fillers formed from organic polymers capable of forming fibers such as poly(ether ketone), polyimide, polybenzoxazole, poly(phenylene sulfide), aromatic polyamides, aromatic polyimides, polyetherimides, polytetrafluoroethylene, or the like; as well as additional fillers and reinforcing agents such as mica, clay, feldspar, flue dust, fillite, quartz, quartzite, perlite, tripoli, diatomaceous earth, carbon black, or the like, or combinations comprising at least one of the foregoing fillers or reinforcing agents.

In one aspect, the thermoplastic composition comprises an additional filler comprising a glass fiber, a glass bead, a flame retardant, a process aid, or a stabilizer, or a combination thereof. In another aspect, the additional filler comprises glass fibers. In a further aspect, the additional filler comprises glass fibers wherein the glass fiber has a cross section that is round or flat. In a yet further aspect, the glass fiber, for example, can be Nittobo (flat) glass fiber, CSG3PA820. In an even further aspect, the glass bead has a cross section that is round or flat.

Exemplary light stabilizers include, for example, benzotriazoles such as 2-(2-hydroxy-5-methylphenyl)benzotriazole, 2-(2-hydroxy-5-tert-octylphenyl)-benzotriazole and 2-hydroxy-4-n-octoxy benzophenone or the like or combinations including at least one of the foregoing light stabilizers. Light stabilizers are generally used in amounts of from about 0.1 to about 1.0 parts by weight, based on 100 parts by weight of the total composition, excluding any filler.

Exemplary plasticizers include, for example, phthalic acid esters such as dioctyl-4,5-epoxy-hexahydrophthalate, tris-(octoxycarbonylethyl) isocyanurate, tristearin, epoxidized soybean oil or the like, or combinations including at least one of the foregoing plasticizers. Plasticizers are generally used in amounts of from about 0.5 to about 3.0 parts by weight, based on 100 parts by weight of the total composition, excluding any filler.

Exemplary antistatic agents include, for example, glycerol monostearate, sodium stearyl sulfonate, sodium dodecylbenzenesulfonate or the like, or combinations of the foregoing antistatic agents. In one aspect, carbon fibers, carbon nanofibers, carbon nanotubes, carbon black, or any combination of the foregoing may be used in a polymeric resin containing chemical antistatic agents to render the composition electrostatically dissipative.

Exemplary mold releasing agents include for example, metal stearate, stearyl stearate, pentaerythritol tetrastearate, beeswax, montan wax, paraffin wax, or the like, or combinations including at least one of the foregoing mold release agents. Mold releasing agents are generally used in amounts of from about 0.1 to about 1.0 parts by weight, based on 100 parts by weight of the total composition, excluding any filler.

Exemplary UV absorbers include for example, hydroxybenzophenones; hydroxybenzotriazoles; hydroxybenzotriazines; cyanoacrylates; oxanilides; benzoxazinones; 2- (2H-benzotriazol-2-yl)-4-(1,1,3,3-tetramethylbutyl)-phenol (CYASORB™ 5411); 2-hydroxy-4-n-octyloxybenzophenone (CYASORB™ 531); 2-[4,6-bis(2,4-dimethylphenyl)-1,3,5-triazin-2-yl]- 5-(octyloxy)-phenol (CYASORB™ 1164); 2,2'-(1,4- phenylene)bis(4H-3,1-benzoxazin-4-one) (CYASORB™ UV- 3638); 1,3-bis[(2-cyano-3,3-diphenylacryloyl)oxy]-2,2-bis[[(2-cyano-3, 3-diphenylacryloyl)oxy]methyl]propane (UVINUL™ 3030); 2,2'-(1,4-phenylene) bis(4H-3,1-benzoxazin-4-one); 1,3-bis[(2-cyano-3,3-diphenylacryloyl)oxy] -2,2-bis[[(2-cyano-3,3-diphenylacryloyl)oxy]methyl]propane; nano-size inorganic materials such as titanium oxide, cerium oxide, and zinc oxide, all with particle size less than 100 nanometers; or the like, or combinations including at least one of the foregoing UV absorbers. UV absorbers are generally used in amounts of from 0.01 to 3.0 parts by weight, based on 100 parts by weight of the total composition, excluding any filler.

Exemplary lubricants include for example, fatty acid esters such as alkyl stearyl esters, e.g., methyl stearate or the like; mixtures of methyl stearate and hydrophilic and hydrophobic surfactants including polyethylene glycol polymers, polypropylene glycol polymers, and copolymers thereof e.g., methyl stearate and polyethylene-polypropylene glycol copolymers in a suitable solvent; or combinations including at least one of the foregoing lubricants. Lubricants are generally used in amounts of from about 0.1 to about 5 parts by weight, based on 100 parts by weight of the total composition, excluding any filler.

As noted above, the disclosed thermoplastic composition can optionally further comprise a flame retardant additive. In various aspects, the flame retardant additive can comprise any flame retardant material or mixture of flame retardant materials suitable for use in the inventive thermoplastic compositions. In another example, the flame retardant additive can comprise phosphate containing material. In another example, the flame retardant additive can comprise a halogen containing material. In further examples, the flame retardant additive is free of or substantially free of one or more of phosphate and/or a halogen. The flame retardant additive can comprise an oligomer organophosphorous flame retardant, including for example, bisphenol A diphenyl phosphate (BPADP). In a further example, the flame retardant can be selected from oligomeric phosphate, polymeric phosphate, oligomeric phosphonate, ammonium polyphosphate (Exolit OP) or mixed phosphate/phosphonate ester flame retardant compositions. The flame retardant can be selected from triphenyl phosphate; cresyldiphenylphosphate; tri(isopropylphenyl)phosphate; resorcinol bis(diphenylphosphate); and bisphenol-A bis(diphenyl phosphate).

Additionally, additives to improve flow and other properties may be added to the composition, such as low molecular weight hydrocarbon resins. These materials are also known as process aids. Particularly useful classes of low molecular weight hydrocarbon resins are those derived from petroleum $C_5$ to $C_9$ feedstock that are derived from unsaturated $C_5$ to $C_9$ monomers obtained from petroleum cracking. Non-limiting examples include olefins, e.g. pentenes, hexenes, heptenes and the like; diolefins, e.g. pentadienes, hexadienes and the like; cyclic olefins and diolefins, e.g. cyclopentene, cyclopentadiene, cyclohexene, cyclohexadiene, methyl cyclopentadiene and the like; cyclic diolefin dienes, e.g., dicyclopentadiene, methylcyclopentadiene dimer and the like; and aromatic hydrocarbons, e.g. vinyltoluenes, indenes, methylindenes and the like. The resins can additionally be partially or fully hydrogenated.

Additional components can include an impact modifier, flow modifier, filler (e.g., a particulate polytetrafluoroethylene (PTFE), glass, carbon, mineral, or metal), reinforcing agent (e.g., glass fibers), antioxidant, heat stabilizer, light stabilizer, UV light stabilizer, plasticizer, lubricant, release agent (such as a mold release agent), antistatic agent, anti-fog agent, antimicrobial agent, chain extender, colorant (e.g, a dye or pigment), demolding agents, flow promoter, flow modifier, surface effect additive, radiation stabilizer, flame retardant, anti-drip agent (e.g., a PTFE-encapsulated styrene-acrylonitrile copolymer (TSAN)), or a combination comprising one or more of the foregoing.

## PROPERTIES AND ARTICLES

In one aspect, the polycarbonate compositions described herein can be useful in producing polycarbonates having optical properties and anti-fogging ability. Specifically, a polycarbonate composition can produce a fog-resistant polycarbonate having good impact strength, flow, and ductility as well as optical properties such as transparency and optical clarity.

Contact angle measurements of the water drop contact angles at the material/air interface show increased contact angle values for those formulations containing the fluorinated oligomers. Durability of the surface effect can be assessed using repeated contact angle measurements after exposing the article to a humid environment for a longer time, water spraying or cleaning procedures such as wiping. Contact angles greater than about 90° and/or greater than about 100° can be achieved using the disclosed compositions and methods.

The contact angle can be obtained through a direct measurement of the static contact angle ($\theta$, reported in degrees) according to ASTM D5946. The static contact angle is the angle between the substrate surface and the tangent line drawn to the droplet surface at the three-phase point of a liquid droplet resting on a plane, solid surface. The profile of the water droplet at its contact interface with the substrate surface is observed. As used herein, the substrate surface refers to a molded plaque of the disclosed fluorinated composition. A protractor is aligned with the tangent of the droplet profile at the three-phase contact points to measure the static contact angle. Moreover, the contact angle can be measured as provided in Yuehua Yuan, "Contact angle and wetting properties," in Surface Science Techniques, vol. 51, p 3-34 (2013). Alternatively, an image of the droplet from a projection or reflective device, such as a camera or a mirror, can be used to obtain the height and width of the droplet in order to calculate the static contact angle (5).

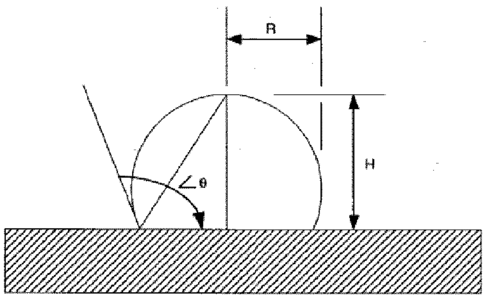


(5)

$$\theta = 2 \text{ arc tan } (H/R)$$

where $\theta$ is the contact angle, H is the height of the water droplet image, and R is half the width of the droplet image.

The effectiveness of the formulation can be tested in a practical fog test where a molded plaque of the anti-fog thermoplastic composition is exposed to an atmosphere of high humidity by placing it over a beaker of water and measuring the time until a fog becomes visible.

By "an increase in fog resistance" is meant that an article including fluorinated oligomers as described herein exhibits an increase in fog resistance compared to a similar article formed without the fluorinated oligomers. Other components, formulation amounts, and formation conditions between the comparative articles is the same (within tolerance).

Conventional polycarbonates can age upon exposure to heat, light, and/or over time, resulting in reduced light transmission and color changes within the material. In another aspect, the polycarbonate composition disclosed can have a purity level suitable for use in optical applications requiring high transmission of visible light and low color. The amount of light transmission can be maintained where the polycarbonate is exposed to moisture and where undesirable fogging can occur. In one aspect, the polycarbonate composition disclosed can have a transmission of at least about 80 %, for example, about 80 %, 82 %, 84 %, 86 %, 88 %, or more, at a thickness of 2.5 millimeters (mm), as measured by ASTM D1003-00.

Other anti-fog tests can be carried out using an IKAMAG-REB oil bath heater with an IKATRON-ETS temperature meter heated to 60 degrees Celsius (°C). In the oil bath hangs a 250 millileters (ml) beaker filled with 200 ml MilliQ® water and is held at a constant temperature of 50 °C $\pm$ 1 °C. The temperature of the water was measured with a Kane-May KM330 temperature meter. The sample to be tested is laid on the top of the beaker and the time until a visible mist of water condensate appears on the plaque is measured. Results are reported in seconds. Longer fog free times indicate better anti-fog performance. Such an example anti-fog test can be manipulated for varying conditions.

The disclosed polycarbonate compositions can be used in the manufacture of various end use articles and products. The polycarbonate compositions can be formed into useful shaped articles by a variety of means such as;

injection molding, extrusion, rotational molding, compression molding, sheet or film extrusion, profile extrusion, gas assist molding, structural foam molding and thermoforming. The polycarbonate compositions described herein can also be made into film and sheet as well as components of laminate systems.

In another aspect, the present disclosure can comprise an article comprising the polycarbonate composition. For example, the article can comprise items subject to regular moisture accumulation and water, especially outdoors, including residential and commercial windows, greenhouse panes, and automotive lenses. The transparency and anti-fog ability can be employed in polycarbonate lenses used in automotive headlamps and windshields, where moisture accumulation and fogging can diminish the transparency and clarity of the material, increasing the inherent risk of operation of the auto.

In further aspects, the disclosed polycarbonate compositions can be used to manufacture articles for use in electronic, imaging, or optical devices. For example, the devices can include mobile phones, mobile computing devices, cameras, video recorders, projectors, corrective lenses, diffusers, or copiers. In yet further examples, the polycarbonate compositions are useful to form articles for use in devices such as lenses for use in portable electronics applications including cell phones, cameras, personal digital assistants, DVD players and recording devices, and the like. Furthermore, articles and products made from the disclosed compositions can also be used in a variety of applications including thin-wall articles, where transparency, precision as defined by a high degree of reproducibility, retention of mechanical properties including impact strength, and precise optical properties are required.

In another aspect, the disclosed composition are useful in the manufacture of optical lenses including camera and viewing lenses, e.g., for mobile telephone cameras, and for digital still photography cameras, mirrors, telescopic lenses, binoculars, automotive camera lenses, and ophthalmic items such as eyewear including sunglasses, protective goggles, face shields, and prescription lenses. Electro-optical devices can also include cathode ray tubes, fluorescent lighting, vapor gas discharge light sources, and neon light, as well as light emitting diodes, organic light emitting diodes, plasma, and liquid crystal screens.

## METHODS

In an aspect, methods can comprise mixing the polycarbonate base resin and the amphiphilic oligomer block additive through compounding for extrusion or through injection molding of articles. As an example, additives are pre-blended with PC powder in a paint shaker for about 3 minutes and afterwards extruded into pellets (e.g., via co-rotating twin screw extruder). The temperatures used for melting the powder are between about 280 °C and about 300 °C and the blend has a residence time of around 30 seconds in the heated part along the screws.

The polycarbonate composition can also be prepared through dissolving the polycarbonate base resin and the amphiphilic oligomer block additive into a common solvent. In another example, the polycarbonate composition can also be obtained through compounding the amphiphilic oligomer block additive with the base resin. As a further example, polycarbonates having enhanced optical qualities can be manufactured by an interfacial polymerization process.

### Interfacial Polymerization

Although the reaction conditions for interfacial polymerization can vary, an exemplary process generally involves dissolving or dispersing a dihydric phenol reactant in aqueous caustic soda or potash, adding the resulting mixture to a water-immiscible solvent medium, and contacting the reactants with a carbonate precursor in the presence of a catalyst such as, for example, triethylamine or a phase transfer catalyst, under controlled pH conditions, e.g., about 8 to about 11. The most commonly used water immiscible solvents include methylene chloride, 1,2-dichloroethane, chlorobenzene, toluene, and the like.

Exemplary carbonate precursors include, for example, a carbonyl halide such as carbonyl bromide or carbonyl chloride, or a haloformate such as a bishaloformates of a dihydric phenol (e.g., the bischloroformates of bisphenol-A, hydroquinone, or the like) or a glycol (e.g., the bishaloformate of ethylene glycol, neopentyl glycol, polyethylene glycol, or the like). Combinations comprising at least one of the foregoing types of carbonate precursors can also be used. In an exemplary embodiment, an interfacial polymerization reaction to form carbonate linkages uses phosgene as a carbonate precursor, and is referred to as a phosgenation reaction.

Among the phase transfer catalysts that can be used are catalysts of the formula $(R_3)_4Q+X$, wherein each $R_3$ is the same or different, and is a C1-10 alkyl group; Q is a nitrogen or phosphorus atom; and X is a halogen atom or a C1-8 alkoxy group or C6-18 aryloxy group. Exemplary phase transfer catalysts include, for example, $[CH_3(CH_2)_3]_4NX$, $[CH_3(CH2)_3]_4PX$, $[CH_3(CH_2)_5]_4NX$, $[CH_3(CH_2)_6]_4NX$, $[CH_3(CH_2)_4]_4NX$, CH3[CH3(CH2)3]3NX, and CH3[CH3(CH2)2]3NX, wherein X is Cl-, Br-, a Cl-8 alkoxy group or a C6-18 aryloxy group. An effective amount of a phase transfer catalyst can be about 0.1 to about 10 wt % based on the weight of bisphenol in the phosgenation mixture. In another embodiment, an effective amount of phase transfer catalyst can be about 0.5 to about 2 wt % based on the weight of bisphenol in the phosgenation mixture.

In one embodiment, the polycarbonate encompassed by this disclosure is made by an interfacial polymerization process. One of ordinary skill in the art would be able to carry out an interfacial process without undue experimentation.

In another embodiment, the polycarbonate encompassed by this disclosure excludes the utilization of a melt polymerization process to make at least one of said polycarbonates.

Protocols may be adjusted so as to obtain a desired product within the scope of the disclosure and this can be done without undue experimentation. A desired product is in one embodiment to achieve a molded article of the composition having one or more of a transmission level higher than about 90.0%, as measured by ASTM D1003, at about 2.5 mm thickness and a YI lower than about 1.5, as measured by ASTM D1925, with an increase in YI lower than about 2 during 2000 hours of heat aging at about 130° C, made by an interfacial process.

EXAMPLES

Detailed embodiments of the present disclosure are disclosed herein; it is to be understood that the disclosed embodiments are merely exemplary of the disclosure that may be embodied in various forms. Therefore, specific structural and functional details disclosed herein are not to be interpreted as limits, but merely as a basis for teaching one skilled in the art to employ the present disclosure. The specific examples below will enable the disclosure to be better understood. However, they are given merely by way of guidance and do not imply any limitation.

The following examples are put forth so as to provide those of ordinary skill in the art with a complete disclosure and description of how the methods, devices, and systems disclosed and claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for.

As a non-limiting example, **Table** 1 illustrates ranges of properties exhibited by an example article formed form the compositions and methods of the present disclosure:

**Table 1**

| **Example Properties** | |
|---|---|
| wt. % surface modifying macromolecule | about 0.2 to about 10 %wt |
| Mw PC | about 10,000 to about 50,000 g/mol |
| resin | interfacially polymerized polycarbonate |
| part thickness | about 1 mm to about 12 mm |
| transmission | >80%, >85%, >about 80%, >about 85% |

The properties listed in Table 1 are example only and include intervening endpoints within the listed ranges. For example, a composition may comprise a weight percent (wt. %) of the total composition of a surface modifying macromolecule (e.g., fluorinated oligomers, an amphiphilic oligomer block additive, etc.) between about 0.2 wt.% and about 5 wt. %. Other wt. % of the surface modifying macromolecule and other additives can be used without departing from the intended article properties.

Unless otherwise expressly stated, it is in no way intended that any method or aspect set forth herein be construed as requiring that its steps be performed in a specific order. Accordingly, where a method claim does not specifically state in the claims or descriptions that the steps are to be limited to a specific order, it is no way intended that an order be inferred, in any respect. This holds for any possible non-express basis for interpretation, including matters of logic with respect to arrangement of steps or operational flow, plain meaning derived from grammatical organization or punctuation, or the number or type of aspects described in the specification.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

It is also to be understood that the terminology used herein is for the purpose of describing particular aspects only and is not intended to be limiting. As used in the specification and in the claims, the term "comprising" may include the aspects "consisting of' and "consisting essentially of." Unless defined otherwise, all technical and scientific terms

used herein have the same meaning as commonly understood by one of ordinary skill in the art to which this disclosure belongs.

As used in the specification and the appended claims, the singular forms "a," "an" and "the" include plural referents unless the context clearly dictates otherwise. Thus, for example, reference to "a polycarbonate" includes mixtures of two or more such polycarbonates. Furthermore, for example, reference to a filler includes mixtures of two or more such fillers.

Ranges can be expressed herein as from "about" one particular value, and/or to "about" another particular value. When such a range is expressed, another aspect includes from the one particular value and/or to the other particular value. Similarly, when values are expressed as approximations, by use of the antecedent "about," it will be understood that the particular value forms another aspect. A value modified by a term or terms, such as "about" and "substantially," is intended to include the degree of error associated with measurement of the particular quantity based upon the equipment available at the time of filing this application. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed. AS a further example, about can mean +/- 10%.

As used herein, the terms "optional" or "optionally" mean that the subsequently described event, condition, component, or circumstance may or may not occur, and that the description includes instances where said event or circumstance occurs and instances where it does not.

Disclosed are component materials to be used to prepare disclosed compositions as well as the compositions themselves to be used within methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight, of a particular element or component in a composition or article denotes the weight relationship between the element or component and any other elements or components in the composition or article for which a part by weight is expressed. Thus, in a composition containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

Compounds disclosed herein are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group. Unless defined otherwise, technical and scientific terms used herein have the same meaning as is commonly understood by one of skill in the art to which this disclosure belongs.

As used herein, the terms "number average molecular weight" or "Mn" can be used interchangeably, and refer to the statistical average molecular weight of all the polymer chains in the sample and is defined by the formula:

$$Mn = \frac{\sum N_i M_i}{\sum N_i},$$

where Mi is the molecular weight of a chain and Ni is the number of chains of that molecular weight. Mn can be determined for polymers, such as polycarbonate polymers or polycarbonate-PMMA copolymers, by methods well known to a person having ordinary skill in the art.

As used herein, the terms "weight average molecular weight" or "Mw" can be used interchangeably, and are defined by the formula:

$$Mw = \frac{\sum N_i M_i^2}{\sum N_i M_i},$$

where Mi is the molecular weight of a chain and Ni is the number of chains of that molecular weight. Compared to Mn, Mw takes into account the molecular weight of a given chain in determining contributions to the molecular weight average. Thus, the greater the molecular weight of a given chain, the more the chain contributes to the Mw. It is to be understood that as used herein, Mw is measured gel permeation chromatography. In some cases, Mw is measured by gel permeation chromatography and calibrated with polycarbonate standards.

## Claims

1. An anti-fog article for a lighting appliance, the article formed from:

   a polycarbonate base resin; and
   an amphiphilic oligomer block additive comprising mid-domain and terminal organo-fluoro groups, wherein the mid-domain has soft and hard segments.

2. The anti-fog article of claim 1, wherein the anti-fog article exhibits a transmission of visible light of at least 80% as measured according to ASTM D1003-00.

3. The anti-fog article of any of claims 1-2, wherein the anti-fog article exhibits a transmission of visible light of at least 85% as measured according to ASTM D1003-00.

4. The anti-fog article of any of claims 1-3, wherein the anti-fog article exhibits an increase in fog resistance compared to a similar article formed without the amphiphilic oligomer block additive.

5. The anti-fog article of any of claims 1-4, wherein a surface to air interface of the anti-fog article exhibits a static contact angle of a water droplet on a surface greater than 90°.

6. The anti-fog article of any of claims 1-5, wherein a surface to air interface of the anti-fog article exhibits a static contact angle of a water droplet on a surface greater than 100°.

7. The anti-fog article of any of claims 1-6, wherein the anti-fog article has a thickness between 1 mm and 12 mm.

8. A thermoplastic resin comprising:

   a polycarbonate base resin; and
   a surface modifying macromolecule;
   wherein the thermoplastic resin has a resin surface with transmission of visible light of at least 80 % measured according to ASTM D1003-00,
   wherein the resin surface is resistant to water accumulation, said resin surface having a static contact angle of a water droplet on a surface greater than 90°,
   wherein the surface modifying macromolecule is less than 5 wt. % of the total weight of the thermoplastic resin,
   wherein the surface modifying macromolecule comprises an amphiphilic oligomer block additive, and
   wherein the amphiphilic oligomer block additive comprises mid-domain and terminal organo-fluoro groups, and wherein the mid-domain has soft and hard segments.

9. An article of manufacture comprising the thermoplastic resin of claim 8, wherein the article is a lens.

10. The article of claim 9, wherein a surface to air interface of the article exhibits a static contact angle of a water droplet on a surface greater than 90°.

11. The article of claim 9, wherein a surface to air interface of the article exhibits a static contact angle of a water droplet

on a surface greater than 100°.

**12.** A method comprising:

forming a polycarbonate admixture comprising a polycarbonate base resin and an amphiphilic oligomer block additive, wherein the amphiphilic oligomer block additive comprises less than 5 wt. % of the weight of the polycarbonate admixture, wherein the amphiphilic oligomer block additive comprises mid-domain and terminal organo-fluoro groups, and wherein the mid-domain has soft and hard segments; and
forming an article from the polycarbonate admixture, wherein the formed article exhibits an increase in fog resistance compared to a similar article formed without the amphiphilic oligomer block additive.

**Patentansprüche**

**1.** Antibeschlag-Artikel für eine Beleuchtungsvorrichtung, wobei der Artikel aus Folgendem gebildet ist:

einem Polycarbonatbasisharz; und
einem amphiphilen Oligomerblockadditiv, umfassend mittlere Domäne und terminale Organofluorgruppen, wobei die mittlere Domäne weiche und harte Segmente hat.

**2.** Antibeschlag-Artikel nach Anspruch 1, wobei der Antibeschlag-Artikel eine Durchlässigkeit von sichtbarem Licht von mindestens 80 %, gemessen gemäß ASTM D1003-00, aufweist.

**3.** Antibeschlag-Artikel nach einem der Ansprüche 1-2, wobei der Antibeschlag-Artikel eine Durchlässigkeit von sichtbarem Licht von mindestens 85 %, gemessen gemäß ASTM D1003-00, aufweist.

**4.** Antibeschlag-Artikel nach einem der Ansprüche 1-3, wobei der Antibeschlag-Artikel eine Zunahme der Beschlagbeständigkeit im Vergleich zu einem ähnlichen Artikel, der ohne das amphiphile Oligomerblockadditiv gebildet ist, aufweist.

**5.** Antibeschlag-Artikel nach einem der Ansprüche 1-4, wobei eine Oberfläche-Luft-Grenzfläche des Antibeschlag-Artikels einen statischen Kontaktwinkel eines Wassertropfens auf einer Oberfläche von größer als 90° aufweist.

**6.** Antibeschlag-Artikel nach einem der Ansprüche 1-5, wobei eine Oberfläche-Luft-Grenzfläche des Antibeschlag-Artikels einen statischen Kontaktwinkel eines Wassertropfens auf einer Oberfläche von größer als 100° aufweist.

**7.** Antibeschlag-Artikel nach einem der Ansprüche 1-6, wobei der Antibeschlag-Artikel eine Dicke zwischen 1 mm und 12 mm hat.

**8.** Thermoplastisches Harz, umfassend:

ein Polycarbonatbasisharz; und
ein oberflächenmodifizierendes Makromolekül;
wobei das thermoplastische Harz eine Harzoberfläche mit Durchlässigkeit von sichtbarem Licht von mindestens 80 %, gemessen gemäß ASTM D1003-00, hat,
wobei die Harzoberfläche gegen Wasseransammlung beständig ist, wobei die Harzoberfläche einen statischen Kontaktwinkel eines Wassertropfens auf einer Oberfläche von größer als 90° hat,
wobei das oberflächenmodifizierende Makromolekül weniger als 5 Gew.-% des Gesamtgewichts des thermoplastischen Harzes ist,
wobei das oberflächenmodifizierende Makromolekül ein amphiphiles Oligomerblockadditiv umfasst und
wobei das amphiphile Oligomerblockadditiv mittlere Domäne und terminale Organofluorgruppen umfasst und
wobei die mittlere Domäne weiche und harte Segmente hat.

**9.** Herstellungsartikel, umfassend das thermoplastische Harz nach Anspruch 8, wobei der Artikel eine Linse ist.

**10.** Artikel nach Anspruch 9, wobei eine Oberfläche-Luft-Grenzfläche des Artikels einen statischen Kontaktwinkel eines Wassertropfens auf einer Oberfläche von größer als 90° aufweist.

**11.** Artikel nach Anspruch 9, wobei eine Oberfläche-Luft-Grenzfläche des Artikels einen statischen Kontaktwinkel eines Wassertropfens auf einer Oberfläche von größer als 100° aufweist.

**12.** Verfahren, umfassend:

Bilden eines Polycarbonatgemischs, umfassend ein Polycarbonatbasisharz und ein amphiphiles Oligomerblockadditiv, wobei das amphiphile Oligomerblockadditiv weniger als 5 Gew.-% des Gewichts des Polycarbonatgemischs umfasst, wobei das amphiphile Oligomerblockadditiv mittlere Domäne und terminale Organofluorgruppen umfasst und wobei die mittlere Domäne weiche und harte Segmente hat; und
Bilden eines Artikels aus dem Polycarbonatgemisch, wobei der gebildete Artikel eine Zunahme der Beschlagbeständigkeit im Vergleich zu einem ähnlichen Artikel, der ohne das amphiphile Oligomerblockadditiv gebildet ist, aufweist.

## Revendications

**1.** Article anti-buée pour un appareil d'éclairage, l'article étant formé :

d'une résine à base polycarbonate; et
d'un additif séquencé d'oligomère amphiphile comprenant des groupes organo-fluoro de mi-domaine et terminaux, dans lequel le mi-domaine a des segments mous et durs.

**2.** Article anti-buée selon la revendication 1, dans lequel l'article anti-buée présente une transmission de lumière visible d'au moins 80 % telle que mesurée selon la norme ASTM D1003-00.

**3.** Article anti-buée selon l'une quelconque des revendications 1 à 2, dans lequel l'article anti-buée présente une transmission de lumière visible d'au moins 85 % telle que mesurée selon la norme ASTM D1003-00.

**4.** Article anti-buée selon l'une quelconque des revendications 1 à 3, dans lequel l'article anti-buée présente une augmentation de résistance à la buée en comparaison avec un article similaire formé sans l'additif séquencé d'oligomère amphiphile.

**5.** Article anti-buée selon l'une quelconque des revendications 1 à 4, dans lequel une interface surface-air de l'article anti-buée présente un angle de contact statique d'une gouttelette d'eau sur une surface supérieur à 90°.

**6.** Article anti-buée selon l'une quelconque des revendications 1 à 5, dans lequel une interface surface-air de l'article anti-buée présente un angle de contact statique d'une gouttelette d'eau sur une surface supérieur à 100°.

**7.** Article anti-buée selon l'une quelconque des revendications 1 à 6, dans lequel l'article anti-buée a une épaisseur entre 1 mm et 12 mm.

**8.** Résine thermoplastique comprenant :

une résine à base polycarbonate ; et
une macromolécule de modification de surface ;
dans laquelle la résine thermoplastique a une surface de résine ayant une transmission de lumière visible d'au moins 80 % telle que mesurée selon la norme ASTM D1003-00,
dans laquelle la surface de résine est résistante à l'accumulation d'eau, ladite surface de résine ayant un angle de contact statique d'une gouttelette d'eau sur une surface supérieur à 90°,
dans laquelle la macromolécule de modification de surface est inférieure à 5 % en poids du poids total de la résine thermoplastique,
dans laquelle la macromolécule de surface comprend un additif séquencé d'oligomère amphiphile, et
dans laquelle l'additif séquencé d'oligomère amphiphile comprend des groupes organo-fluoro de mi-domaine et terminaux, et dans laquelle le mi-domaine a des segments mous et durs.

**9.** Article de fabrication comprenant la résine thermoplastique selon la revendication 8, dans lequel l'article est une lentille.

**10.** Article selon la revendication 9, dans lequel une interface surface-air de l'article présente un angle de contact statique d'une gouttelette d'eau sur une surface supérieur à 90°.

**11.** Article selon la revendication 9, dans lequel une interface surface-air de l'article présente un angle de contact statique d'une gouttelette d'eau sur une surface supérieur à 100°.

**12.** Procédé comprenant :

la formation d'un mélange de polycarbonate comprenant une résine à base polycarbonate et un additif séquencé d'oligomère amphiphile, dans lequel l'additif séquencé d'oligomère amphiphile comprend moins de 5 % en poids du poids total du mélange de polycarbonate, dans lequel l'additif séquencé d'oligomère amphiphile comprend des groupes organo-fluoro de mi-domaine et terminaux, et dans lequel le mi-domaine a des segments mous et durs ; et

la formation d'un article à partir du mélange de polycarbonate, dans lequel l'article formé présente une augmentation de résistance à la buée en comparaison avec un article similaire formé sans l'additif séquencé d'oligomère amphiphile.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 62085603
- WO 2005066257 A


### Non-patent literature cited in the description


- **Y.W TANG.** Synthesis of surface-modifying macromolecules for use in segmented polyurethanes. *J. Appl. Polym. Sci.,* November 1996, vol. 62 (8), 1133-1145
- **YUEHUA YUAN.** Contact angle and wetting properties. *Surface Science Techniques,* 2013, vol. 51, 3-34